# EUROPÄISCHE PATENTSCHRIFT

(11) **EP 1 664 169 B1**
(45) Veröffentlichungstag und Bekanntmachung des Hinweises auf die Patenterteilung: **13.05.2009**
(21) Anmeldenummer: 04764957.9
(22) Anmeldetag: 08.09.2004
(51) Int. Cl.: C08J 9/00, C08J 9/32, C08L 75/04

(54) **EXPANDIERBARE THERMOPLASTISCHE POLYURETHAN-BLENDS**
EXPANDABLE THERMOPLASTIC POLYURETHANE BLENDS
MELANGES DE POLYURETHANNE THERMOPLASTIQUES EXPANSIBLES

(30) Priorität: 15.09.2003 DE 10342857
(43) Veröffentlichungstag der Anmeldung: 07.06.2006
(73) Patentinhaber: BASF SE, 67056 Ludwigshafen (DE)
(72) Erfinder: LEBERFINGER, Marcus, 49124 Georgsmarienhütte (DE); GÜNTHER, Carsten, 49419 Wagenfeld (DE)
(86) Internationale Anmeldenummer: PCT/EP2004/010014
(87) Internationale Veröffentlichungsnummer: WO 2005/026243

(56) Entgegenhaltungen:
- EP-A- 0 959 104
- WO-A-00/44821
- WO-A-01/10950

## Beschreibung

Die Erfindung betrifft expandierbare Mischungen, enthaltend a) ein Blend aus ai) thermoplastischem Polyurethan und aii) Ethylen-Propylen-(EPM)-Kautschuken und/oder modifizierte Ethylen-Propylen-(EPM)-Kautschuken, und b) mindestens ein Treibmittel, sowie daraus hergestellte expandierte thermoplastische Polyurethane.

Thermoplastische Polyurethane (TPU) sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden.

Die Herstellung erfolgt nach den bekannten Verfahren im One-shot- oder Prepolymerverfahren auf der Bandanlage oder auf dem Reaktionsextruder. Hierbei werden die Reaktionskomponenten Diisocyanat, langkettiges Diol und kurzkettiges Diol (Kettenverlängerer) gemeinsam oder in bestimmter Reihenfolge vereinigt und zur Reaktion gebracht. Die Reaktionspartner werden in einem Verhältnis NCO-Gruppen zur Summe aller mit den NCO-Gruppen reagierenden Wasserstoffatomen von 1 : 0,9 -1,2, vorzugsweise 1 : 0,95 - 1,05 insbesondere im Verhältnis 1 : 1 gemischt.

Es ist allgemein bekannt, thermoplastische Kunststoffe (TPE) unter Verwendung von Treibmitteln zu verschäumen. Insbesondere Polystyrol und Polyolefine werden in großem Umfang verschäumt.

Als Treibmittel kommen hierbei chemische Treibmittel, insbesondere solche, die unter thermischer Zersetzung Gase abspalten, wie Zitronensäure, Hydrogencarbonate oder Azodicarbonamide, wie Celegoene; Tracel; Hydrocerole etc., ("Hydrocerole: Chemische Treib- und Nukleierungsmittel für Kunststoffe; Verarbeitungshinweise; Spritzguss; Hart-PVC-Schaum; Schaumextrusiuon; Produktprogramm; Clariant März 2000"; "Neue Treibmittelentwicklungen im Bereich Spritzguss; Lübke, G.; Holzberg, T.; Seminare zur Kunststoffverarbeitung IKV; 4. Februar 2003") oder durch physikalische Treibmittel inerte, bei den Verschäumbedingungen verdampfende Flüssigkeiten, oder expandierbare Mikrospheren (z.B. Expancel^{®} der Akzo oder Mikrospheren von Lehmann & Voss) zum Einsatz. Auch Kombinationen aus chemischen Treibmitteln und expandierbaren Mikrospheren können eingesetzt werden (Foaming Plastics with Expancel Microspheres; Elfving, K.; Blowing Agent Systems: Formulations and Processing; Paper 9, Page 1 - 5; Mikrohohlkugeln aus Kunststoffen; N.N.; Kunststoffe 82 (1992) 4 (36366).

Es sind auch Verfahren bekannt, thermoplastische Polyurethane mit Treibmitteln zu verschäumen. Im Falle von TPU führen chemische Treibmittel zu einer vergleichsweisen sehr groben Schaumstruktur und zu einer vermehrten Bildung von Lunkern.

In WO 01/10950 werden Mischungen aus TPU und EPM-Kautschuk beschrieben, die zudem expandierbare Mikrospheren enthalten Können.

Zur Behebung dieses Mangels beschreibt EP-A-692 516 ein Verfahren zur Herstellung von Schaumstoffen auf Basis von TPU, bei dem als Treibmittel eine Mischung von chemischen Treibmitteln und Mikrospheren vom Typ Expancel^{®} eingesetzt wird.

Expandierbare Mikrospheren sind Mikrohohlkugeln, die aus einer dünnen Kunststoffhülle, beispielsweise Polyacrylnitril oder Copolymere hiervon, bestehen. Diese Mikrohohlkugeln sind mit Gas, in der Regel mit Kohlenwasserstoffen gefüllt. Durch die einwirkende Temperatur in der thermoplastischen Verarbeitung kommt es zu einer Erweichung der Kunststoffhülle und gleichzeitig zu einer Expansion des eingeschlossenen Gases. Hierdurch kommt es zu einer Expansion der Mikrospheren. In WO 00/44821 wird der Einsatz einer Treibmittelkombination aus Mikrospheren vom Typ Expancel^{®} vorgeschlagen, bei der die Mikrospheren mit Kohlenwasserstoffen gefüllt sind.

In EP-A-1174459 wird das in WO 00/44821 beschriebene Verfahren verbessert, indem dem TPU ein Fließmittel zugesetzt wird. Damit sollte die Oberfläche der Formkörper verbessert und die Formzeit gesenkt werden.

In EP-A-1174458 soll der gleiche Effekt durch Zusatz von Plastifizierungsmitteln erreicht werden.

Die Treibmittel können hierbei als Masterbatches, das sind Mischungen der Treibmittel mit einem Träger, vorzugsweise einem Thermoplasten, sogenannten Konzentraten oder als Pulver dem Basis-TPU zugemischt werden. Im letzteren Falle ist es sinnvoll dem TPU-Granulat vorab ein Bindemittel (z. B. Mineralöl, Parafinöl) zuzugeben um ein Anhaften des Pulvers auf dem Granulat zu ermöglichen.

Durch die genannten Verfahren können mikrozellige TPU-Fertigteile, beispielsweise Schuhsohlen, mit Dichten von 0,2 - 1,0 g/cm³, bevorzugt 0,3 - 0,9 g/cm³, besonders bevorzugt 0,4 - 0,7 g/cm³ gefertigt werden.

Problematisch ist, dass mikrozellige Fertigteile aus expandiertem TPU mit Dichten <1,0 g/cm³ die mechanischen Eigenschaften kompakter TPU-Produkte nicht erreichen können. Besonders deutlich zeigt sich dies am Abriebswert. Niedrige Abriebswerte sind jedoch gerade für Schuhsohlen ein wesentliches Qualitätsmerkmal.

Aufgabe der vorliegenden Erfindung war es somit, expandierte TPU, insbesondere solche mit Dichten <1,0 g/cm³ zur Verfügung zu stellen, die sehr gute mechanische Eigenschaften, insbesondere geringe Werte für den Abrieb, aufweisen und beispielsweise als Schuhsohlen verwendet werden können.

Die Aufgabe konnte überraschenderweise durch den Einsatz von expandierbaren Mischungen oder Blends aus Ethylen-Propylen-(EPM)-Kautschuken beziehungsweise modifizierten Ethylen-Propylen-(EPM)-Kautschuken und TPU beziehungsweise gelöst werden.

Gegenstand der Erfindung sind demzufolge expandierbare Zusammensetzungen, enthaltend a) eine Mischung aus ai) thermoplastischem Polyurethan und aii) Ethylen-Propylen-(EPM)-Kautschuken und/oder modifizierte Ethylen-Propylen-(EPM)-Kautschuken, und b) mindestens ein Treibmittel, dadurch gekennzeichnet, dass als Treibmittel expandierbare Mikrospheren mit einer TMA-Dichte von kleiner als 10 kg/m³ eingesetzt werden.

Gegenstand der Erfindung sind weiterhin expandierte Blends aus ai) thermoplastischem Polyurethan und aii) Ethylen-Propylen-(EPM)-Kautschuken und/oder modifizierte Ethylen-Propylen-(EPM)-Kautschuken, dadurch gekennzeichnet, dass als Treibmittel expandierbare Mikrospheren mit einer TMA-Dichte von kleiner als 10 kg/m³ eingesetzt werden.

Gegenstand der Erfindung ist weiterhin ein Verfahren zur Herstellung von expandierten thermoplastischen Polyurethanen, dadurch gekennzeichnet, dass expandierbare Zusammensetzungen, enthaltend a) eine Mischung aus ai) thermoplastischem Polyurethan und aii) Ethylen-Propylen-(EPM)-Kautschuken und/oder modifizierte Ethylen-Propylen-(EPM)-Kautschuken, und b) als Treibmittel expandierbare Mikrospheren mit einer TMA-Dichte von kleiner als 10 kg/m³ unter Bedingungen, die zu einer Expansion des Treibmittels führen, thermoplastisch verarbeitet werden.

Unter dem Begriff "thermoplastische Verarbeitung" ist jede Verarbeitung zu verstehen, die mit einem Aufschmelzen des TPU verbunden ist. Die thermoplastische Verarbeitung erfolgt hierbei zumeist bei 80 - 240 °C bevorzugt bei 120 - 230 °C insbesondere bevorzugt bei 170 - 220 °C, auf dem Fachmann bekannten Spritzguss- und Extrusionsanlagen oder Pulversinteranlagen.

Gegenstand der Erfindung sind weiterhin Formkörper, insbesondere Schuhsohlen aus expandierten Blends aus ai) thermoplastischem Polyurethan und aii) Ethylen-Propylen-(EPM)-Kautschuken und/oder modifizierte Ethylen-Propylen-(EPM)-Kautschuken, dadurch gekennzeichnet, dass als Treibmittel expandierbare Mikrospheren mit einer TMA-Dichte von kleiner als 10 kg/m³ eingesetzt werden.

In der Mischung a) können die Komponenten ai) und aii) einzeln, insbesondere in Form von Mischungen aus Partikeln der Komponente ai) und Partikeln der Komponente aii), die bei der thermoplastischen Verarbeitung Blends bilden, oder bevorzugt in Form von Partikeln, die aus Blends der Komponenten ai) und aii) bestehen, vorliegen.

Als Mischungen a) werden bevorzugt solche eingesetzt, bei denen das thermoplastische Polyurethan ai) eine Shore-Härte von 40 A bis 90 D aufweist und das Gewichtsverhältnis von ai) zu aii) im Bereich von 3:1 bis 999:1 liegt. Die in dieser Anmeldung genannten Shore-Härten werden nach DIN 53 505 bestimmt.

Erfindungsgemäß einsetzbare Blends aus ai) und aii) sowie deren Herstellung werden beispielsweise in EP 959 104 beschrieben.

Als thermoplastische Polyurethane ai) können die üblichen und bekannten Verbindungen eingesetzt werden, wie sie beispielsweise im Kunststoffhandbuch, Band 7 "Polyurethane", Carl Hanser Verlag München Wien, 3. Auflage 1993, Seiten 455 bis 466 beschrieben sind.

Bevorzugt werden TPU eingesetzt, die einen Schmelzindex oder MFR (Meltflowratio; 190 °C/3,8 kg; DIN EN 1133) von 1 - 350 g/10 min, bevorzugt von 30 - 150 g/10 min besitzen. Die Verwendung von TPU für expandierbare bzw. expandierte TPU ist jedoch nicht auf einen bestimmten MFR beschränkt.

Unter thermoplastischen Polyurethanen können im Sinne der vorliegenden Erfindung weichmacherfreie und weichmacherhaltige TPU, insbesondere solche mit einem Gehalt von 0 - 50 Gew.-%, bezogen auf das Gewicht der Mischung, an üblichen Weichmacher verstanden werden. Als Weichmacher kommen allgemein für diesen Zweck bekannte Verbindungen, z.B. Phthalate und insbesondere Benzoate in Betracht.

Die Herstellung der TPU erfolgt nach üblichem Verfahren durch Umsetzung von Diisocyanaten mit Verbindungen mit mindestens zwei mit Isocyanatgruppen reaktiven Wasserstoffatomen, vorzugsweise difunktionellen Alkoholen.

Als Diisocyanate können übliche aromatische, aliphatische und/oder cycloaliphatische Diisocyanate, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methyl-pentamethylen-diisocyanat-1,5,2-Ethyl-butylen-diisocyanat-1,4,1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat eingesetzt werden.

Als gegenüber Isocyanaten reaktive Verbindungen können allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole. Bevorzugt werden als (b) Polyesterdiole eingesetzt, die erhältlich sind durch Umsetzung von Butandiol und Hexandiol als Diol mit Adipinsäure als Dicarbonsäure, wobei das Gewichtsverhältnis von Butandiol zu Hexandiol bevorzugt 2 zu 1 beträgt. Bevorzugt ist weiterhin Polytetrahydrofuran mit einem Molekulargewicht von 750 bis 2500 g/mol, bevorzugt 750 bis 1200 g/mol.

Als Kettenverlängerungsmittel können allgemein bekannte Verbindungen eingesetzt werden, beispielsweise Diamine und/oder Alkandiole mit 2 bis 10 C-Atomen im Alkylenrest, insbesondere Ethylenglykol und/oder Butandiol-1,4, und/oder Hexandiol und/oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerer Ethylenglykol und Hexandiol, besonders bevorzugt Ethylenglykol.

Üblicherweise werden Katalysatoren eingesetzt, welche die Reaktion zwischen den NCO-Gruppen der Diisocyanate und den Hydroxylgruppen der Aufbaukomponenten beschleunigen, beispielsweise tertiäre Amine, wie Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, wie Zinndiacetat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung eingesetzt.

Neben Katalysatoren können den Aufbaukomponenten bis auch übliche Hilfsstoffe hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Zur Einstellung des Molekulargewichtes können gegenüber Isocyanat reaktive monofunktionelle Verbindungen, bevorzugt Monoalkohole eingesetzt werden.

Die Herstellung der TPU erfolgt zumeist nach üblichen Verfahren, wie mittels Bandanlagen oder Reaktionsextruder.

Die als Komponente aii) eingesetzten Ethylen-Propylen-(EPM)-Kautschuken und/oder modifizierte Ethylen-Propylen-(EPM)-Kautschuke sind ebenfalls allgemein bekannt, vielfach beschrieben und kommerziell erhältlich. Diese können bereits bei der Herstellung des TPU oder erst bei der eigentlichen thermoplastischen Verarbeitung durch zumischen zu einem sogenannten Dryblend (Granulazmischung) zugesetzt werden.

Die EPM- bzw. modifizierten EPM-Kautschuke weisen bevorzugt eine Viskosität gemessen nach Mooney L(1+4) bei 100°C von > 35 bzw. einen MFR (230 °C, 10 kg) von > 8 auf.

Die modifizierten EPM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Bevorzugt wird (b) unmodifiziert oder gepfropft mit Acrylsäure, Methacrylsäure, deren Derivaten und/oder Maleinsäureanhydrid in den erfindungsgemäßen Mischungen eingesetzt.

Die erfindungsgemäßen Mischungen können bevorzugt zusätzlich zu (a) und (b) Hilfs- und/oder Zusatzstoffe, beispielsweise Weichmacher, Lichtschutzmittel, Gleitmittel, Treibmittel, Haftvermittler, Füllstoffe, oberflächenaktive Substanzen, Flammschutzmittel, Farbstoffe und Pigmente, Stabilisatoren gegen Hydrolyse, Licht, Hitze oder Verfärbung, Farbstoffe und/oder Verstärkungsmittel enthalten. Diese Hilfs- und/oder Zusatzstoffe können sowohl bereits bei der Herstellung der TPU, wie bereits beschrieben, eingesetzt werden, als auch der Komponente (a) und/oder (b) bei der Herstellung der Mischung zugesetzt werden.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin,

Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-di-tertiärbutyl-4-hydroxyphenyl)-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertiärbutyl-4-methylphenol, Pentaerythrityltetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Bei der Mischung der Komponenten ai) und aii) liegen diese bevorzugt in einem fließfähigen, erweichten oder geschmolzenen Zustand vor. Das homogene Vermischen der Komponenten erfolgt bevorzugt bei Temperaturen, die über den Schmelztemperaturen von ai) und aii) liegen. Üblicherweise beträgt die Temperatur, bei der die Vermischung der Komponenten erfolgt, 160 bis 250 °C, vorzugsweise 190 bis 240 °C, besonders bevorzugt 200 bis 230 °C. Das Vermischen der Komponenten zu einem homogenen Produkt kann mit üblichen Geräten, die Einrichtungen zum Heizen und Rühren, Kneten oder Walzen aufweisen, kontinuierlich oder diskontinuierlich bevorzugt mit Entgasung durchgeführt werden. Bevorzugt erfolgt das Vermischen der Komponenten (a) und (b) in einem üblichen Extruder.

Die erfindungsgemäßen Blends, die bevorzugt eine Shore-Härte von 60 A bis 54 D, aufweisen, können beispielsweise pelletiert oder granuliert werden.

Als Treibmittel b) werden expandierbare Mikrospheren mit einer TMA-Dichte von kleiner als 10 kg/m³ eingesetzt. Expandierbare Mikrospheren sind Mikrohohlkugeln, die aus einer dünnen Kunststoffhülle, beispielsweise Polyacrylnitril oder Copolymere hiervon, bestehen. Diese Mikrohohlkugeln sind mit Gas, in der Regel mit Kohlenwasserstoffen gefüllt. Durch die einwirkende Temperatur in der thermoplastischen Verarbeitung kommt es zu einer Erweichung der Kunststoffhülle und gleichzeitig zu einer Expansion des eingeschlossenen Gases. Hierdurch kommt es zu einer Expansion der Mikrospheren. Die Expansionsfähigkeit der Mikrospheren kann durch die Bestimmung der TMA-Dichte [kg/m³] beschrieben werden (Stare Thermal Analysis System Fa. Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikrospheren kollabieren.

Die erfindungsgemäß eingesetzten Mikrospheren weisen bevorzugt einen Durchmesser zwischen 20 µm und 40 µm auf. Derartige Mikrosphreres sind erhältlich bei Akzo Nobel, Casco Products GmbH, Essen unter der Marke Expancel^{®}.

Es wurde festgestellt, dass durch die Verwendung von expandierbaren Mikrospheren mit einer TMA-Dichte von kleiner 10 kg/m³; bevorzugt von 2-10 kg/m³ und insbesondere bevorzugt von 2 - 7 kg/m³, in Pulverform oder Masterbatchform eine besonders feine Zellstruktur, eine Unterdrückung der Lunkerbildung und keine Bildung von Einfallstellen zu beobachten war und zudem das Verarbeitungsfenster, beispielsweise bezüglich der Temperatur, deutlich größer war.

Der Gehalt an expandierbaren Mikrospheren in der Mischung ist abhängig von der angestrebten Dichte der expandierten TPU. Bevorzugt werden pro 100 Gew.-Teilen des zu expandierenden, das heißt zu schäumendem TPU oder TPU-Blend, zwischen 0,1 Gew.-Teilen und 10 Gew.-Teilen, bevorzugt zwischen 0,2 Gew.-Teilen und 6,5 Gew.-Teilen der erfindungsgemäßen expandierbaren Mikrosphreres eingesetzt.

Besonders bevorzugt sind expandierbare TPU bzw. expandierte TPU, die folgende Komponenten enthalten:
85 Gew.-% bis 99,5 Gew.-%, bevorzugt zwischen 90 Gew.-% und 99,5 Gew.%, besonders bevorzugt zwischen 92 Gew.-% und 98 Gew.-% TPU oder Blend enthaltend TPU, 0,5 Gew.-% bis 15 Gew.%, bevorzugt zwischen 2 Gew.-% und 8 Gew.-% Mikrospheren-Masterbatch, 0 bis 10 Gew.%, bevorzugt 0,1 Gew.-% bis 2 Gew.-% Farbstoff, z.B. allgemein bekannte Schwarzpaste oder Farbstoffzugaben in Form von Farbmasterbatches.

Das Mikrospheren-Masterbatch enthält bevorzugt:
5 Gew.-% bis 90 Gew.%, bevorzugt 25 Gew.-% bis 65 Gew.-% Mikrospheren und 10 Gew.-% bis 95 Gew.-%, bevorzugt 35 Gew.-% bis 75 Gew.-% Träger, bevorzugt thermoplastische Träger, beispielsweise die an späterer Stelle dargestellten Trägermaterialen, besonders bevorzugt EVA (Ethylenvinylacetat).

Durch den Einsatz der bevorzugt verwendeten expandierbaren Mikrospheren werden über einen weiten Verarbeitungsbereich expandierte TPU, die eine feine, lunkerfreie und von Einfallstellen freie Schaumstrukturen aufweisen, erzielt. Der Grund hierfür könnte darin liegen, dass expandierbare Mikrospheren mit niedriger TMA-Dichte einen höheren Innendruck bei Befüllung des Werkzeuges ausüben und somit die Gefahr der Lunker- und Einfallstellenbildung deutlich verringert bzw. verhindert wird, wie dies z.B. auch im herkömmlichen Spritzguss ohne die Verwendung eines Treibmittels nur durch das Aufbringen eines Nachdruckes von Außen erreicht wird.

Durch den Einsatz von Mikrospheren mit niedrigen TMA-Dichten kann zudem bei vergleichbarer Dichte der gewichtsanteilige Einsatz von Mikrospheren minimiert werden. Dies führt zu Kosteneinsparungen, da in der Regel die Mikrospheren der preisbestimmende Faktor bzgl. der Rohstoffe des Endproduktes ist.

Überraschenderweise kann durch den Einsatz der bevorzugt verwendeten expandierbaren Mikrospheren auf den Einsatz von Co-Treibmitteln völlig verzichtet werden. Dennoch ist es möglich, dass bei bestimmten Anwendungen auch Co-Treibmittel eingesetzt werden können.

Die bevorzugt verwendeten expandierbaren Mikrospheren können, wie ausgeführt, in Form von Pulver, wobei die Aufbringung auf das TPU-Granulat hierbei mit und ohne Bindemittel, wie 0,05 - 2 Gew.-% Mineral- oder Parafinöl erfolgen kann, oder bevorzugt als Masterbatches eingesetzt werden. Als Masterbatch ist zu verstehen, dass die expandierbaren Mikrospheren in einem Träger, beispielsweise Bindemittel, Wachse, oder einem Thermoplasten, wie TPU, EVA (Ethylenvinylacetat), Polyvinylchlorid, Polyethylen, Polypropylen, Polyester, Polystyrol, oder Thermoplastic Rubber, oder Blends hieraus, bevorzugt einem Träger mit einem Schmelzindex (MFR; 190 °C/2,16 kg; ASTM D 1238) von 5 - 700 g/10 min, bevorzugt 50 - 600 g/10 min, besonders bevorzugt 150 - 500 g/10 min und einem Schmelzpunkt zwischen 60 und 110 °C, besonders bevorzugt EVA (bevorzugter MFR: 80 - 800 g/10 min; 125 °C/325 g; ASTM D 1238), in Granulatform gebunden sind. Bei der Herstellung dieser Mikrospheren-Master batches werden in der Regel Thermoplaste mit einem sehr niedrigen Schmelzpunkt und sehr niedrigen Viskositäten bzw. hohen Schmelzindizes, wie oben beschrieben, eingesetzt, um hierdurch möglichst niedrige Temperaturen bei der Masterbatchherstellung verwenden zu können, um eine vorzeitige Expansion zu vermeiden.

Durch den Einsatz solcher Masterbatches werden Staubbildungen, wie sie bei der Verwendung und dem Handling von expandierbaren Mikrospheren in Pulverform entstehen, vermieden und man kann hierdurch auf einen kostspieligen Explosionsschutz der Anlagen und Gebäude, in denen die erfindungsgemäßen expandierten TPU hergestellt werden, verzichten. Außerdem ist die homogene Vermischung der expandierbaren Mikrospheren mit dem TPU bei der Verwendung von Masterbatches einfacher. Die Herstellung der Mikrospher-Masterbatches kann beispielsweise auf Knetern, Einwellen- oder Zweiwellenextrudern erfolgen.

Zur Herstellung der expandierten Blends, werden die Blends mit dem Treibmittel b), insbesondere expandierbaren Mikrospheren, gemischt und thermoplastisch zu den gewünschten Formkörpern verarbeitet. Dies kann beispielsweise mittels Spritzguss, Sintern oder mittels Extrusion erfolgen. Durch die Temperatur bei der thermoplastischen Verarbeitung kommt es zu einer Expansion der expandierbaren Mikrospheren und somit zur Ausbildung der expandierten TPU. Vorzugsweise wird die Schmelze in Formen eingetragen und erstarrt bzw. rekristallisiert.

Das Mischen der TPU oder TPU-Blends mit den expandierbaren Mikrospher-Pulvern kann in einfachen Kunststoffgranulatmischern wie z.B. Taumelmischern mit oder ohne vorheriges Aufbringen von 0,05 - 2 % Bindemittel, z.B. Parafin- oder Mineralöl erfolgen. Das Mischen der TPU oder TPU-Blends mit den expandierbaren Mikrospher-Masterbatches kann ebenfalls in einfachen Kunststoffgranulatmischern, beispielsweise. Taumelmischem, maschinell oder in einfachen Kunststoffboxen von Hand zu einem sogenannten Dryblend erfolgen.

Neben den expandierbaren Mikrospheren können auch weitere Treibmittel eingesetzt werden. Wie bereits oben ausgeführt, kommen hierfür chemische Treibmittel, insbesondere solche, die unter thermischer Zersetzung Gase abspalten, wie Zitronensäure, Hydrogencarbonate oder Azodicarbonamide, wie Celegoene^{®}, Tracel^{®}, Hydrocerol^{®}, oder physikalische Treibmittel, zumeist inerte, bei den Verschäumbedingungen verdampfende Flüssigkeiten, zum Einsatz.

In einer besonders bevorzugten Ausführungsform des erfindungsgemäßen Verfahrens wird das Treibmittel b) mit der Komponente a) direkt an der Anlage, in der die thermoplastische Verarbeitung durchgeführt wird, vermischt. Dabei erfolgt die Zuführung des Treibmitttels bevorzugt zur Plastifiziereinheit der Verarbeitungsmaschine.

Durch das erfindungsgemäße Verfahren ist es überraschenderweise möglich, expandierte Formkörper auf Basis von TPU herzustellen, die bei einer Dichte von Schuhsohlen, mit Dichten von 0,2 -1,0 g/cm³, bevorzugt 0,3 - 0,9 g/cm³, besonders bevorzugt 0,4 - 0,7 g/cm³ ein annähernd bzw. vergleichbares Abriebverhalten zeigen wie kompakte thermoplastische Polyurethane.

Die erfindungsgemäßen Formteile aus expandierten thermoplastischen Polyurethanen können vorzugsweise als Schuhsohlen, aber auch im Automobilbau oder als Verschleißteile in der Landwirtschaft eingesetzt werden.

Die erfindungsgemäßen expandierten TPU können beispielsweise als Folien, Schläuche, Profile, Fasern, Kabel, Schuhsohlen, sonstige Schuhteile, Ohrmarken, Automobilteile, Landwirtschaftliche Produkte, Elektroprodukte, Dämpfungselemente; Armlehnen; Kunststoffmöbelelemente, Skischuhe, Anschlagpuffer, Rollen, Skibrillen, Powderslushoberflächen verwendet werden. Bevorzugt sind erfindungsgemäß Schuhsohlen und Schuhkunststoffteile, insbesondere solche mit einer kompakten Haut und einem geschäumten Kern, insbesondere gefärbte, insbesondere schwarz gefärbte Schuhsohlen. Auch lichtbeständige aliphatische TPU oder Blends hieraus lassen sich erfindungsgemäß verschäumen. Beispiele sind etwa Produkte für das Automobil-Interieur- und Exterieur wie z.B. Instrumententafeloberflächen, Schaltknäufe, Bedienelemente- und Knöpfe, Antennen und Antennenfüße, Griffe, Gehäuse, Schalter, Verkleidungen und Verkleidungselemente, etc..

Die Erfindung soll an den nachfolgenden Beispielen näher erläutert werden.

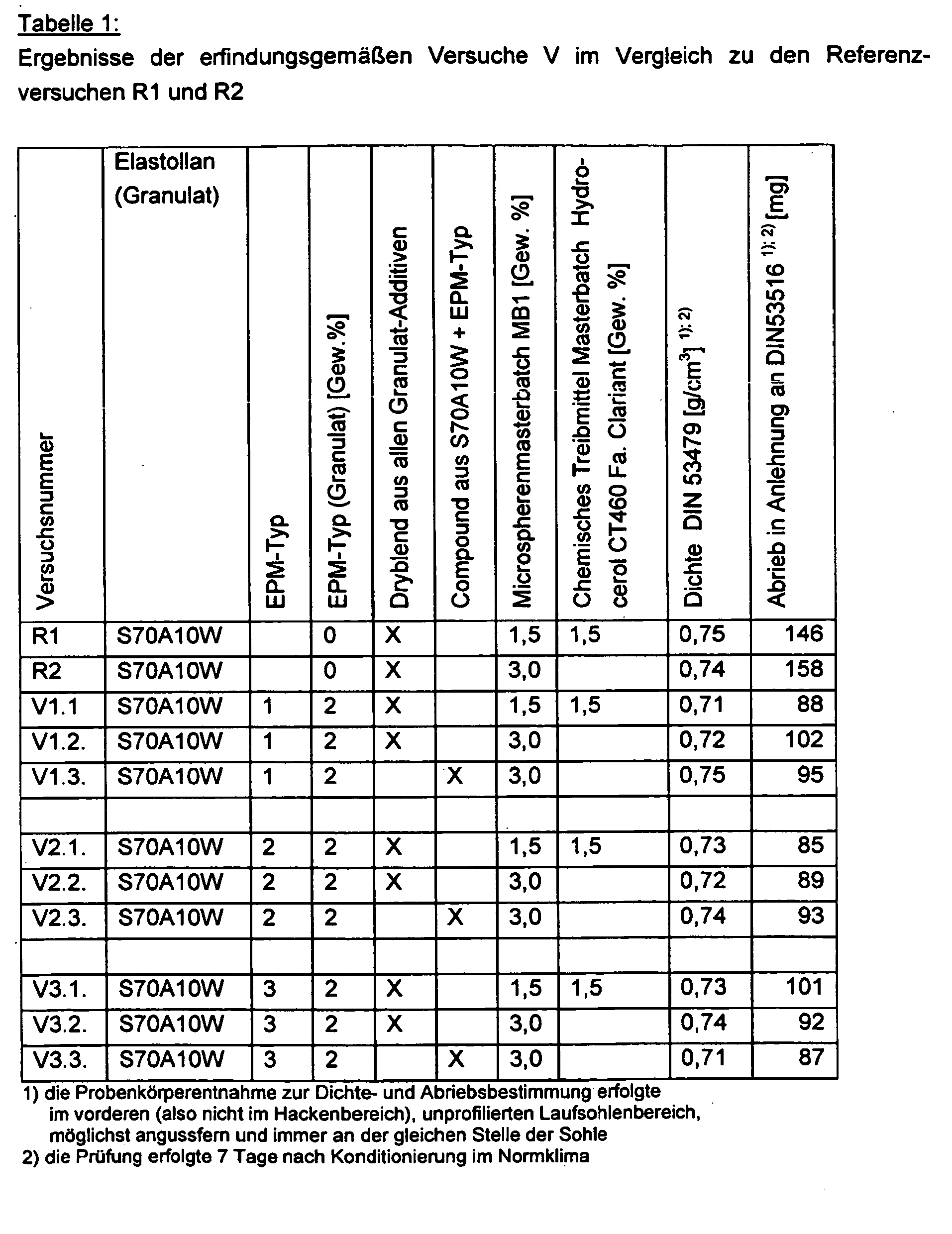

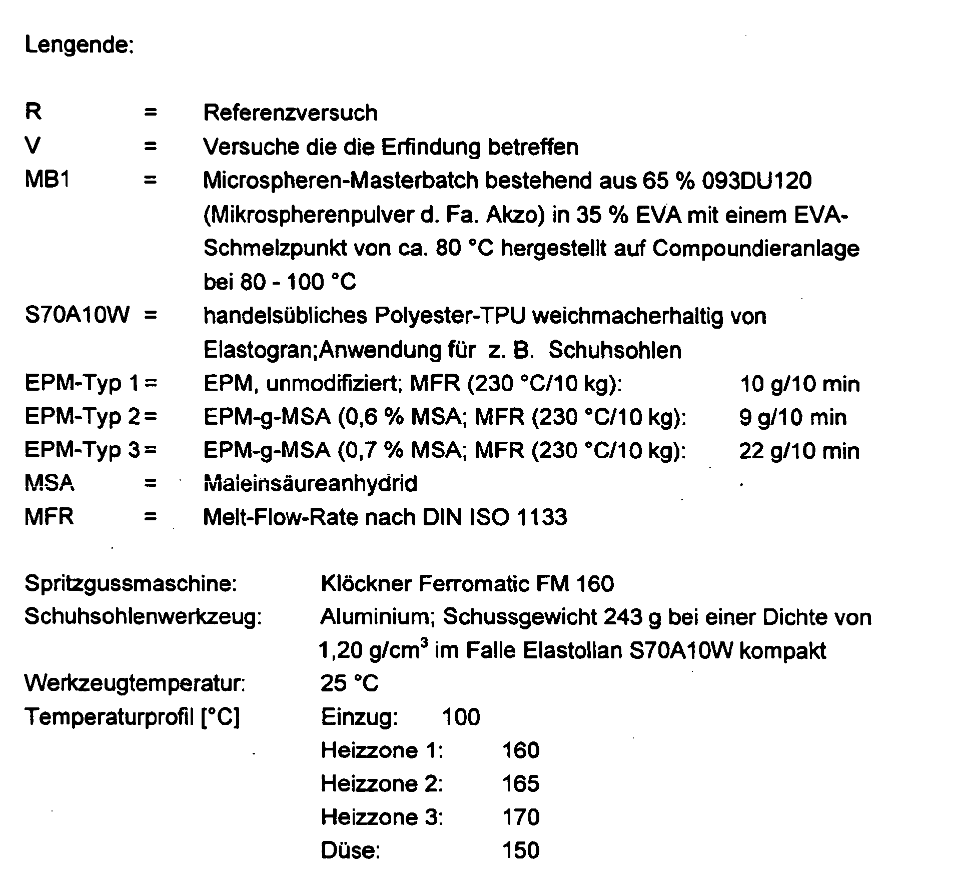

### Dryblend:

alle Granulat-Additive werden in einfacher Weise mit Elastollan S70A10W in einem geeigneten Mischbehältnis (z. B. einfacher Betonmischer) vermischt und anschließend 3 h/80 °C getrocknet

### Compound:

Thermoplastisches Polyurethan Elastollan^{®} S70A10W der Elastogran GmbH wurde mit dem EPM-Typ gemäß Tabelle 1 auf einem Zweiwellenextruder mit einem Durchmesser von 40 mm oberhalb der Schmelzpunkte der Komponenten bei 200°C compoundiert. Dieses Compound wird anschließend mit den übrigen Granulat-Additiven in einfacher Weise einem Mischbehältnis (z.B. einfacher Betonmischer) vermischt und anschließend 3 h/80 °C getrocknet.

## Patentansprüche

1. Expandierbare Zusammensetzungen, enthaltend a) eine Mischung aus ai) thermoplastischem Polyurethan und aii) Ethylen-Propylen-(EPM)-Kautschuken und/oder modifizierte Ethylen-Propylen-(EPM)-Kautschuken, und b) mindestens ein Treibmittel, **dadurch gekennzeichnet, dass** als Treibmittel expandierbare Mikrospheren mit einer TMA-Dichte von kleiner 10 kg/m³ eingesetzt werden.

2. Expandierbare Zusammensetzungen nach Anspruch 1, **dadurch gekennzeichnet, dass** das Verhältnis von ai) zu aii) in der Mischung a) im Bereich von 3:1 bis 999:1 liegt

3. Expandierbare Zusammensetzungen nach Anspruch 1, **dadurch gekennzeichnet, dass** die Komponenten ai) und aii) in Form von Blends vorliegen.

4. Expandierbare Zusammensetzungen nach Anspruch 1, **dadurch gekennzeichnet, dass** das thermoplastische Polyurethan ai) eine Shore-Härte von 40 A bis 90 D aufweist.

5. Expandierte Blends nach Anspruch 1, **dadurch gekennzeichnet, dass** sie eine Dichte im Bereich von 0,2 - 1,0 g/cm³ aufweisen.

6. Verfahren zur Herstellung von expandierten Blends, **dadurch gekennzeichnet, dass** Mischungen, enthaltend a) ein Blend aus ai) thermoplastischem Polyurethan und aii) Ethylen-Propylen-(EPM)-Kautschuken und/oder modifizierte Ethylen-Propylen-(EPM)-Kautschuken, und b) mindestens als Treibmittel expandierbare Mikrospheren mit einer TMA-Dichte von kleiner 10 kg/m³ unter Bedingungen, die zu einer Expansion des Treibmittels führen, thermoplastisch verarbeitet werden.

7. Formkörper, aus expandierten Blends aus ai) thermoplastischem Polyurethan und aii) Ethylen-Propylen-(EPM)-Kautschuken und/oder modifizierte Ethylen-Propylen-(EPM)-Kautschuken **dadurch gekennzeichnet, dass** als Treibmittel zu ihrer Herstellung expandierbare Mikrospheren mit einer TMA-Dichte von kleiner 10 kg/m³-eingesetzt werden.

8. Verwendung der Formkörper nach Anspruch 7 als Schuhsohlen. Folien, Schläuche, Profile, Fasern, Kabel, Schuhsohlen, sonstige Schuhteile, Ohrmarken, Automobilteile, Landwirtschaftliche Produkte, Elektroprodukte, Dämpfungselemente; Armlehnen; Kunststoffmöbelelemente, Skischuhe, Anschlagpuffer, Rollen, Skibrillen, Powderslushoberflächen, Automobil-Interieur- und Exterieur wie Instrumententafeloberflächen, Schaltknäufe, Bedienelemente- und Knöpfe, Antennen und Antennenfüße, Griffe, Gehäuse, Schalter, Verkleidungen und Verkleidungselemente.

## Claims

1. An expandable composition comprising a) a mixture of ai) thermoplastic polyurethane and aii) ethylene/propylene (EPM) rubbers and/or modified ethylene/propylene (EPM) rubbers, and b) at least one blowing agent, wherein expandable microspheres having a TMA density of less than 10 kg/m³ are used as blowing agent.

2. The expandable composition according to claim 1, wherein the ratio of ai) to aii) in the mixture a) is from 3:1 to 999:1.

3. The expandable composition according to claim 1, wherein the components ai) and aii) are present in the form of blends.

4. The expandable composition according to claim 1, wherein the thermoplastic polyurethane ai) has a Shore hardness of from 40 A to 90 D.

5. The expanded blend according to claim 1, which has a density of 0.2 - 1.0 g/cm³.

6. A process for the preparation of expanded blends, wherein a mixture comprising a) a blend of ai) thermoplastic polyurethane and aii) ethylene/propylene (EPM) rubbers and/or modified ethylene/propylene (EPM) rubbers, and b) at least as blowing agent expandable microspheres having a TMA density of less than 10 kg/m³ is processed by a thermoplastic method under conditions which lead to expansion of the blowing agent.

7. A molding comprising an expanded blend of ai) thermoplastic polyurethane and aii) ethylene/propylene (EPM) rubbers and/or modified ethylene/propylene (EPM) rubbers, wherein expandable microspheres having a TMA density of less than 10 kg/m³ are used as blowing agent for the preparation thereof.

8. The use of the molding according to claim 7 as films, tubes, profiles, fibers, cables, shoe soles, other shoe parts, ear tags, automotive parts, agricultural products, electrical products, damping elements, arm rests, plastics furniture elements, ski boots, stop buffers, rollers, ski goggles, powder slush surfaces, automotive interior and exterior products, such as instrument panel surfaces, gear stick knobs, controls and buttons, aerials and aerial bases, handles, housings, switches, claddings and cladding elements.

## Revendications

1. Compositions expansibles, contenant a) un mélange de ai) un polyuréthanne thermoplastique et aii) des caoutchoucs éthylène-propylène (EPM) et/ou des caoutchoucs éthylène-propylène (EPM) modifiés, et b) au moins un agent gonflant, **caractérisées en ce que** des microsphères expansibles d'une densité TMA inférieure à 10 kg/m³ sont utilisées en tant qu'agent gonflant.

2. Compositions expansibles selon la revendication 1, **caractérisées en ce que** le rapport entre ai) et aii) dans le mélange a) est dans la plage allant de 3:1 à 999:1.

3. Compositions expansibles selon la revendication 1, **caractérisées en ce que** les composants ai) et aii) se présentent sous la forme de mélanges.

4. Compositions expansibles selon la revendication 1, **caractérisées en ce que** le polyuréthanne thermoplastique ai) présente une dureté Shore de 40 A à 90 D.

5. Mélanges expansés selon la revendication 1, **caractérisés en ce qu'**ils présentent une densité dans la plage allant de 0,2 à 1,0 g/cm³.

6. Procédé de fabrication de mélanges expansés, **caractérisé en ce que** des mélanges, contenant a) un mélange de ai) un polyuréthanne thermoplastique et aii) des caoutchoucs éthylène-propylène (EPM) et/ou des caoutchoucs éthylène-propylène (EPM) modifiés, et b) au moins des microsphères expansibles d'une densité TMA inférieure à 10 kg/m³ en tant qu'agent gonflant, sont traités thermoplastiquement dans des conditions qui conduisent à une expansion de l'agent gonflant.

7. Corps moulés, à base de mélanges expansés de ai) un polyuréthanne thermoplastique et aii) des caoutchoucs éthylène-propylène (EPM) et/ou des caoutchoucs éthylène-propylène (EPM) modifiés, **caractérisés en ce que** des microsphères expansibles d'une densité TMA inférieure à 10 kg/m³ sont utilisées en tant qu'agent gonflant pour leur fabrication.

8. Utilisation des corps moulés selon la revendication 7 en tant que films, tuyaux, profilés, fibre, câbles, semelles de chaussures, autres parties de chaussures, marquages à l'oreille, parties d'automobiles, produits agricoles, produits électroniques, éléments d'amortissement, accoudoirs, éléments de meubles en plastique, chaussures de ski, butoirs d'arrêt, rouleaux, lunettes de ski, surfaces de moulage par embouage, intérieurs et extérieurs d'automobiles tels que les surfaces du tableau de bord, leviers de vitesses, éléments et boutons d'actionnement, antennes et fondations d'antennes, poignées, boîtiers, interrupteurs, revêtements et éléments de revêtement.
